(19) Europäisches Patentamt
European Patent Office
Office européen des brevets

(11) **EP 1 446 317 B1**

(12) **FASCICULE DE BREVET EUROPEEN**

(45) Date de publication et mention de la délivrance du brevet:
**13.04.2011 Bulletin 2011/15**

(21) Numéro de dépôt: **02803461.9**

(22) Date de dépôt: **22.11.2002**

(51) Int Cl.:
***B62D 5/04*** *(2006.01)*

(86) Numéro de dépôt international:
**PCT/FR2002/004014**

(87) Numéro de publication internationale:
**WO 2003/043869 (30.05.2003 Gazette 2003/22)**

(54) **ENSEMBLE DE DIRECTION ASSISTEE ELECTRIQUE,ET PROCEDE DE COMMANDE DE CET ENSEMBLE**

ELEKTRISCHE SERVOLENKUNGSANORDNUNG UND STEUERVERFAHREN DAFÜR

ELECTRIC POWER-STEERING ASSEMBLY, AND CONTROL METHOD FOR SAME

(84) Etats contractants désignés:
**AT BE BG CH CY CZ DE DK EE ES FI FR GB GR IE IT LI LU MC NL PT SE SK TR**

(30) Priorité: **23.11.2001 FR 0115156**

(43) Date de publication de la demande:
**18.08.2004 Bulletin 2004/34**

(73) Titulaire: **Renault s.a.s.**
**92100 Boulogne Billancourt (FR)**

(72) Inventeurs:
- **GUEGAN, Stéphane**
  **F-75002 Paris (FR)**
- **GUICHARD, Laurent**
  **F-78460 Chevreuse (FR)**
- **QUIOT, Jean-Marc**
  **F-92100 Boulogne Billancourt (FR)**

(56) Documents cités:
**EP-A- 1 167 158     WO-A-01/20412**
**US-A- 4 785 901**

- **PATENT ABSTRACTS OF JAPAN vol. 2000, no. 26, 1 juillet 2002 (2002-07-01) -& JP 2001 260926 A (TOYOTA AUTOM LOOM WORKS LTD), 26 septembre 2001 (2001-09-26)**

EP 1 446 317 B1

**Description**

La présente invention se rapporte à un ensemble de direction assistée électrique, et à un procédé de commande de cet ensemble.

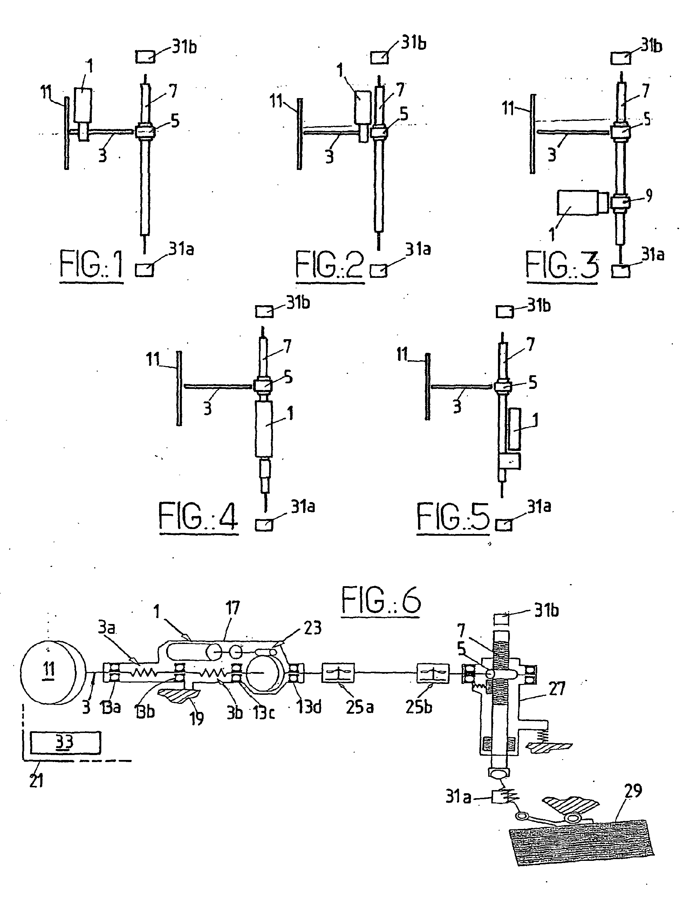

On connaît de la technique antérieure un ensemble de direction assistée électrique, du type comprenant un volant 11 (voir figures 1 à 5), une crémaillère 7 commandée par ledit volant, des butées droite 31a et gauche 31b limitant la course de ladite crémaillère et un moteur électrique 1 agencé de manière à contribuer à la mise en mouvement de ladite crémaillère sous l'effet de la mise en rotation dudit volant.

Selon les cas, et comme cela est connu en soi, cet ensemble de direction assistée peut être de l'un des types suivants :

- à colonne : moteur électrique 1 coopérant avec la colonne de direction 3 (voir figure 1),
- à pignon : moteur électrique 1 coopérant avec le pignon 5 interposé entre la colonne de direction 3 et la crémaillère 7 (voir figure 2),
- à double pignons : moteur électrique 1 coopérant avec un deuxième pignon 9 en prise avec la crémaillère 7 (voir figure 3),
- à crémaillère et moteur électrique coaxiaux (voir figure 4), et
- à crémaillère et moteur électrique parallèles (voir figure 5).

Dans ces ensembles de direction assistée de la technique antérieure, le niveau d'assistance est maximum jusqu'en fin de course de crémaillère, c'est-à-dire jusqu'au moment au cette crémaillère vient au contact de ses butées droite et gauche.

Ainsi, lors des manoeuvres, la vitesse de rotation du volant et donc la vitesse de déplacement de la crémaillère peuvent être élevées en fin de course, de sorte qu'il peut se produire des chocs entre cette crémaillère et ses butées droite et gauche.

De tels chocs donnent lieu à des bruits de claquement particulièrement désagréables pour l'utilisateur, et nécessitent le renforcement et/ou l'ajout de blocs en matériau élastomère pour limiter les risques d'endommagement des butées.

Il est toutefois connu, par le document WO 01/20412, un ensemble de direction assistée visant à réduire le bruit d'impact de la crémaillère contre les butées de fin de course, par un couple de freinage qui suit une loi directement fonction de l'écart séparant la crémaillère des butées, et directement proportionnelle à cet écart selon certaines configurations, cette loi évoluant selon la vitesse de rotation du volant. Il en résulte, à l'approche des butées, un comportement différent selon la vitesse de rotation du volant, qui peut perturber le conducteur.

La présente invention a pour but de supprimer ces inconvénients.

On atteint ce but de l'invention avec un procédé de commande d'un ensemble de direction électrique comprenant :

- un volant,
- une crémaillère commandée par ledit volant,
- des butées droite et gauche limitant la course de ladite crémaillère,
- un moteur électrique agencé de manière à contribuer à la mise en mouvement de ladite crémaillère sous l'effet de la mise en rotation dudit volant,
- un capteur de couple de volant,
- un superviseur dûment programmé pour élaborer une consigne de commande dudit moteur électrique à partir de la mesure fournie par ledit capteur de couple de volant,
- un capteur d'angle de volant,
- un capteur de vitesse de rotation de volant,

le procédé comprenant une étape dans laquelle une valeur de consigne de couple de durcissement est ajoutée à ladite valeur de consigne de couple d'assistance lorsque ladite crémaillère arrive à proximité desdites butées, de manière à obtenir une valeur de consigne de commande dudit moteur électrique permettant de ralentir la vitesse de déplacement de ladite crémaillère lorsqu'elle arrive à proximité desdites butées, le procédé étant caractérisé en ce que la valeur de consigne de couple de durcissement est déterminé de la manière suivante :

$$Cdur = K1 \ (Av). \ Vv \ si \ Av > 0 \ ou \ Vv > 0,$$

$$Cdur = K2 (Av) . Vv \text{ si } Av < 0 \text{ ou } Vv < 0,$$

$$Cdur = 0 \text{ sinon,}$$

où K1 et K2 sont des fonctions respectivement croissante et décroissante de l'angle de volant, et suivent les lois suivantes :

$$- K1 = 0 \text{ si } Av < \bullet 1.Av_{butée\ d},$$

$$- K1 = k1. (Av - \alpha 1. Av_{butée\ d}) \text{ si } \alpha 1. Av_{butée\ d} < Av < \beta 1.Av_{butée\ d},$$

$$- K1 = K1max \text{ si } \beta 1. Av_{butée\ d} < Av < Av_{butée\ d},$$

où $\alpha 1$ et $\beta 1$ sont des constantes positives inférieures à 1 telles que $\alpha 1 < \beta 1$, k1 et K1max sont des constantes positives, et $Av_{butée\ d}$ désigne l'angle de butée droite dudit volant, et

$$K2 = 0 \text{ si } Av > \alpha 2. Av_{butée\ g},$$

$$K2 = k2. (Av - \alpha 2.Av_{butée\ g}) \text{ si } \alpha 2.Av_{butée\ g} > Av > \beta 2. Av_{butée\ g},$$

$$K2 = K2max \text{ si } \beta 2. Av_{butée\ g} > Av > Av_{butée\ g},$$

où $\alpha 2$ et $\beta 2$ sont des constantes négatives de valeur absolue inférieure à 1 telles que $\alpha 2 > \beta 2$, K2max est une constante positive, k2 est une constante négative, et $Av_{butée\ g}$ désigne l'angle de butée gauche dudit volant.

Suivant d'autres caractéristiques dece procédé :

- on met à jour périodiquement les valeurs d'angles de butées droite et gauche dudit volant,
- on réalise ladite mise à jour :

  - en attribuant initialement des valeurs minimales, en valeur absolue, auxdits angles de butées droite et gauche,
  - en substituant une valeur d'angle mesurée à chacune desdites valeurs d'angles de butées chaque fois que ladite valeur d'angle mesurée dépasse, en valeur absolue, l'une desdites valeurs d'angles de butées,

- on ajoute ladite valeur de consigne de couple de durcissement à la mesure effectuée par ledit capteur de couple de volant, de manière à obtenir une mesure de couple de volant modifiée à partir de laquelle on élabore ladite valeur de consigne de couple d'assistance avec ladite loi d'assistance.

D'autres caractéristiques et avantages de la présente invention apparaîtront à la lecture de la description qui va suivre et à l'examen du dessin annexé, dans lequel :

- les figures 1 à 5 représentent différentes architectures de directions assistées électriques décrites dans le préambule de la présente description,
- la figure 6 est un schéma détaillé d'un ensemble de direction assistée électrique du type à colonne, sur la base duquel la présente invention sera décrite,
- la figure 7 est un schéma bloc illustrant les principales fonctions mises en oeuvre dans la présente invention, et
- les figures 8 et 9 illustrent les lois de variation de deux paramètres intervenant dans le procédé de commandé selon l'invention.

Sur ces figures, des références identiques désignent des organes ou ensembles d'organes identiques ou analogues.

On se reporte à présent à la figure 6, sur laquelle on voit les différents éléments constitutifs d'un ensemble direction assistée électrique du type « à colonne », sur la base duquel la présente invention va être décrite, étant entendu que cette invention peut s'appliquer à tous les types d'ensembles de direction assistée décrits en préambule à la présente description.

Comme cela apparaît sur cette figure 6, l'ensemble de direction assistée à colonne comprend un volant 11 monté fixe sur une colonne de direction 3 elle-même montée pivotante grâce à une pluralité de roulements à billes 13a à 13d à l'intérieur d'un carter 17 monté fixe sur le châssis 19 d'un véhicule automobile 21.

La colonne de direction 3 comprend une zone 3a dite « collapsable », pouvant se rétracter en cas de choc frontal, et une zone 3b fournissant une information quant au couple Cv appliqué par le conducteur au volant 11.

Un moteur électrique 1 coopère avec la colonne de direction 3 par l'intermédiaire d'un réducteur 23.

A son extrémité opposée au volant 11, la colonne de direction 3 coopère, par l'intermédiaire de cardans 25a, 25b et d'un pignon 5, avec une crémaillère 7 montée coulissante à l'intérieur d'un boîtier de direction 27 et coopérant à ses extrémités avec les roues directrices du véhicule 21, une seule 29 de ces roues ayant été représentée.

La course de la crémaillère 7 est limitée à droite et à gauche par des butées droite 31a et gauche 31b.

De préférence, l'ensemble de direction assistée selon l'invention comprend également des capteurs (non représentés) permettant de mesurer l'angle Av du volant 11, la vitesse de rotation Vv de ce volant, et la vitesse d'avancement U du véhicule 21.

Un superviseur 33 permet, à partir de l'ensemble des mesures fournies par les capteurs susmentionnés, d'élaborer une consigne de commande Ccom du moteur électrique.

On va à présent décrire spécifiquement le procédé de commande mis en oeuvre par le superviseur 33 pour atteindre le but de l'invention.

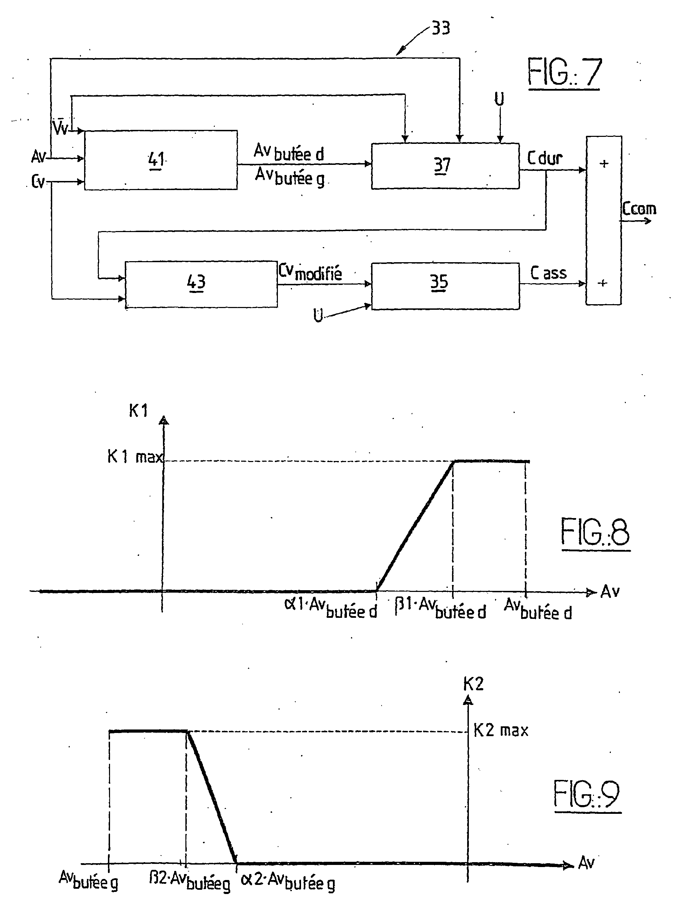

On se reporte pour cela à la figure 7, sur laquelle on voit qu'on élabore, à partir de la mesure effectuée par le capteur de couple de volant Cv et grâce à une loi d'assistance 35 connue en soi (loi du type de celles utilisée dans les directions assistées classiques), une valeur de consigne de couple d'assistance Cass pour le moteur électrique 1.

La valeur de consigne Cass est appliquée directement à ce moteur (c'est-à-dire qu'elle s'identifie à Ccom) tant que la crémaillère 7 est éloignée des butées droite 31a et gauche 31b.

En revanche, lorsque la crémaillère 7 arrive à proximité de ces butées, on ajoute une valeur de couple de durcissement Cdur à la valeur de consigne Cass pour obtenir la valeur de consigne de commande Ccom du moteur électrique.

Par « à proximité », on entend « à une distance prédéterminée », cette distance pouvant être réglable et variable d'un véhicule à un autre.

Il faut comprendre qu'étant donné que Cdur et Cass sont de signes contraires, la valeur absolue de Ccom est inférieure à celle de Cass.

En ajoutant la valeur Cdur à la valeur Cass, on réduit donc l'assistance lorsque la crémaillère 7 se rapproche des butées 31a, 31b, ce qui permet de ralentir la vitesse de déplacement de la crémaillère et donc l'intensité des chocs sur les butées.

De préférence, dans le cas où le dispositif d'assistance selon l'invention comprend des capteurs permettant de mesurer l'angle Av du volant 11 et la vitesse de rotation Vv de ce volant, on détermine en 37 (voir figure 7) la valeur de consigne de couple de durcissement Cdur de la manière suivante :

$$Cdur = K1(Av).Vv \text{ si } Av > 0 \text{ ou } Vv > 0,$$

$$Cdur = K2(Av).Vv \text{ si } Av < 0 \text{ ou } Vv < 0,$$

$$Cdur = 0 \text{ sinon,}$$

où K1 et K2 sont des fonctions respectivement croissante et décroissante de l'angle de volant Av, pouvant éventuellement être réglées différemment selon la sensation que l'on souhaite obtenir au niveau du volant 11.

Avec une loi de variation de ce type, la valeur absolue de la valeur de consigne de couple de durcissement Cdur augmente lorsque la valeur absolue de l'angle de volant Av croît (c'est-à-dire lorsque la crémaillère 7 se rapproche de la butée droite 31a ou gauche 31b) et/ou lorsque la vitesse de rotation du volant Vv croît.

Cela permet de diminuer la valeur absolue de la valeur de consigne de commande Ccom du moteur électrique 1, c'est-à-dire en fait le niveau d'assistance de la direction, lorsqu'on tourne le volant 11 d'un angle important et/ou rapidement.

De préférence, le paramètre K1 pourra suivre la loi de variation suivante, illustrée par la figure 8 :

$$K1 = 0 \text{ si } Av < \alpha1.Av_{butée\ d},$$

$$K1 = k1.(Av - \alpha1.Av_{butée\ d}) \text{ si } \alpha1.Av_{butée\ d} < Av < \beta1.Av_{butée\ d},$$

$$K1 = K1max \text{ si } \beta1.Av_{butée\ d} < Av < Av_{butée\ d},$$

où $\alpha1$ et $\beta1$ sont des constantes positives inférieures à 1 telles que $\alpha1 < \beta1$, k1 et K1max - sont des constantes positives, et $Av_{butée\ d}$, ou angle de butée droite, désigne l'angle dudit volant lorsque ladite crémaillère atteint ladite butée droite.

De préférence, le paramètre K2 pourra suivre la loi de variation suivante, illustrée par la figure 9 :

$$K2 = 0 \text{ si } Av > \alpha2.Av_{butée\ g},$$

$$K2 = k2.(Av - \alpha2.Av_{butée\ g}) \text{ si } \alpha2.Av_{butée\ g} > Av > \beta2.Av_{butée\ g},$$

$$K2 = K2max \text{ si } \beta2.Av_{butée\ g} > Av > Av_{butée\ g},$$

où $\alpha2$ et $\beta2$ sont des constantes négatives de valeur absolue inférieure à 1 telles que $\alpha2 > \beta2$, K2max est une constante positive, k2 est une constante négative, et $Av_{butée\ g}$, ou angle de butée gauche, désigne l'angle dudit volant lorsque ladite crémaillère atteint ladite butée gauche.

De préférence, on met à jour périodiquement les valeurs d'angles de butées $Av_{butée\ d}$ et $Av_{butée\ g}$ en 41 (voir figure 7).

Pour ce faire, on peut commencer par attribuer initialement (c'est-à-dire lorsque le véhicule 21 sort de la chaîne de fabrication) des valeurs $Av\ (0)_{butée\ d}$, $Av\ (0)_{butée\ g}$, minimales en valeur absolues, aux valeurs d'angles de butées $Av_{butée\ d}$, $Av_{butée\ g}$.

Ces valeurs minimales sont des valeurs d'angles en dessous desquelles on est sûr que $Av_{butée\ d}$, $Av_{butée\ g}$ ne peuvent pas descendre (en valeur absolue).

Par la suite (c'est-à-dire lors de la vie du véhicule), on substitue une valeur d'angle mesurée Av à chacune des valeurs d'angles $Av_{butée\ d}$, $Av_{butée\ g}$ chaque fois que la valeur d'angle mesurée Av dépasse, en valeur absolue, les valeurs d'angles de butées $Av_{butée\ d}$, $Av_{butée\ g}$.

Autrement dit, dès que le capteur d'angle de volant Av lit une valeur d'angle supérieure (en valeur absolue) à la dernière valeur d'angle de butée identifiée, celle-ci prend la valeur de celle-là.

Cette mise à jour automatique des valeurs d'angles de butées permet de remédier au fait qu'il existe toujours une incertitude de l'ordre de 5% sur la position de la crémaillère 7 en fin de course droite et gauche, et donc une incertitude correspondante sur les positions de butées droite et gauche du volant 11.

De préférence également, on ajoute en 43 (voir figure 7) la valeur de consigne de couple de durcissement Cdur à la mesure effectuée par le capteur de couple de volant Cv, de manière à obtenir une mesure de couple de volant modifiée $Cv_{modifiée}$ à partir de laquelle on élabore la valeur de consigne de couple d'assistance Cass avec la loi d'assistance 35.

Bien entendu , il s'agit là encore d'une somme algébrique, Cdur et Cv étant de signes contraires.

Le fait de modifier la mesure Cv de la sorte permet d'obtenir une valeur de consigne de couple d'assistance Cass identique à celle que l'on obtiendrait si l'on ne durcissait pas la direction.

Cela permet de rendre ce durcissement effectif, c'est-à-dire d'éviter qu'il ne soit compensé sous l'effet de la loi d'assistance 35.

On notera également que l'on pourra prendre en compte la vitesse U du véhicule 21 pour calculer la valeur de consigne de commande Ccom, comme cela est connu en soi (voir figure 7).

On pourra ainsi atténuer l'assistance de direction lorsque le véhicule 21 roule à vitesse élevée, par exemple.

Comme on peut le comprendre à présent, l'ensemble de direction assistée selon l'invention et son procédé de commande permettent d'atténuer la force des chocs de la crémaillère 7 contre ses butées droite 31a et gauche 31b en réduisant sa vitesse en fin de course.

On peut de la sorte supprimer les bruits de claquement apparaissant lorsque la crémaillère arrive en fin de course, et s'affranchir de tout renforcement des butées et/ou d'ajout de blocs en matériau élastomère.

Bien entendu, le mode de réalisation décrit et représenté est fourni à titre d'exemple illustratif et non limitatif.

**Revendications**

1. Procédé de commande d'un ensemble de direction assistée électrique comprenant :

   - un volant (11),
   - une crémaillère (7) commandée par ledit volant (11),
   - des butées droite (31a) et gauche (31b) limitant la course de ladite crémaillère (7),
   - un moteur électrique (1) agencé de manière à contribuer à la mise en mouvement de ladite crémaillère (7) sous l'effet de la mise en rotation dudit volant (11),
   - un capteur de couple de volant (Cv),
   - un superviseur (33) dûment programmé grâce à une loi d'assistance (35) pour élaborer une consigne de couple d'assistance (Cass) dudit moteur électrique (1) à partir de la mesure fournie par ledit capteur de couple de volant,
   - un capteur d'angle de volant (Av),
   - un capteur de vitesse de rotation de volant (Vv),

   le procédé comprenant une étape dans laquelle une valeur de consigne de couple de durcissement (Cdur) est ajoutée à ladite valeur de consigne de couple d'assistance (Cass) lorsque ladite crémaillère (7) arrive à proximité desdites butées (31a, 31b), de manière à obtenir une valeur de consigne de commande (Ccom) dudit moteur électrique permettant de ralentir la vitesse de déplacement de ladite crémaillère (7) lorsqu'elle arrive à proximité desdites butées (31a, 31b), le procédé est **caractérisé en ce que** la valeur de consigne de couple de durcissement (Cdur) est déterminée de la manière suivante :

   $$\text{Cdur} = \text{K1 (Av).Vv si Av} > 0 \text{ ou Vv} > 0,$$

   $$\text{Cdur} = \text{K2 (Av).Vv si Av} < 0 \text{ ou Vv} < 0,$$

   $$\text{Cdur} = 0 \text{ sinon,}$$

   où K1 et K2 sont des fonctions respectivement croissante et décroissante de l'angle de volant (Av), et suivent les lois suivantes :

   $$\text{K1} = 0 \text{ si Av} < \alpha 1. \text{Av}_{\text{butée d}},$$

   $$\text{K1} = \text{k1. (Av-} \alpha 1. \text{Av}_{\text{butée d}}) \text{ si } \alpha 1. \text{Av}_{\text{butée d}} < \text{Av} < \beta 1. \text{Av}_{\text{butée d}},$$

   $$\text{K1} = \text{K1max si } \beta 1. \text{Av}_{\text{butée d}} < \text{Av} < \text{Av}_{\text{butée d}},$$

   où $\alpha 1$ et $\beta 1$ sont des constantes positives inférieures à 1 telles que $\alpha 1 < \beta 1$, k1 et K1 max sont des constantes positives, et $\text{Av}_{\text{butée d}}$ désigne l'angle de butée droite dudit volant (11), et

$$K2 = 0 \text{ si } Av > \alpha2. Av_{\text{butée g}},$$

$$K2 = k2. (Av - \alpha2. Av_{\text{butée g}}) \text{ si } \alpha2. Av_{\text{butée g}} > Av > \beta2. Av_{\text{butée g}}$$

$$K2 = K2\text{max si } \beta2. Av_{\text{butée g}} > Av > Av_{\text{butée g}}$$

où $\alpha2$ et $\beta2$ sont des constantes négatives de valeur absolue inférieure à 1 telles que $\alpha2 > \beta2$, K2max est une constante positive, k2 est une constante négative, et $Av_{\text{butée g}}$ désigne l'angle de butée gauche dudit volant (11).

**2.** Procédé selon la revendication 1, **caractérisé en ce qu'**on met à jour périodiquement les valeurs d'angles de butées droite ($Av_{\text{butée d}}$) et gauche ($Av_{\text{butée g}}$) dudit volant (11).

**3.** Procédé selon la revendication 2, **caractérisé en ce qu'**on réalise la mise à jour :

- en attribuant initialement des valeurs minimales ($Av (0)_{\text{butée d}}$, $Av (0)_{\text{butée g}}$), en valeur absolue, auxdits angles de butées droite ($Av_{\text{butée d}}$) et gauche ($Av_{\text{butée g}}$)
- en substituant une valeur d'angle mesurée ($Av$) à chacune desdites valeurs d'angles de butées ($Av_{\text{butée d}}$, $Av_{\text{butée g}}$) chaque fois que ladite valeur d'angle mesurée ($Av$) dépasse, en valeur absolue, l'une desdites valeurs d'angles de butées ($Av_{\text{butée d}}$, $Av_{\text{butée g}}$)·

**4.** Procédé selon l'une quelconque des revendications 1 à 3, **caractérisé en ce qu'**on ajoute ladite valeur de consigne de couple de durcissement (Cdur) à la mesure effectuée par ledit capteur de couple de volant (Cv), de manière à obtenir une mesure de couple de volant modifiée ($Cv_{\text{modifiée}}$) à partir de laquelle on élabore ladite valeur de consigne de couple d'assistance (Cass) avec ladite loi d'assistance (35).

**Claims**

**1.** Method for controlling an electric power-steering assembly comprising:

- a steering wheel (11),
- a rack (7) controlled by the said steering wheel (11),
- a right stop (31a) and left stop (31b) limiting the travel of the said rack (7),
- an electric motor (1) arranged so as to contribute to the setting in motion of the said rack (7) under the effect of the setting in rotation of the said steering wheel (11),
- a steering wheel torque sensor (Cv),
- a supervisor (33) duly programmed by virtue of a power-assistance law (35) in order to generate a setpoint of power-assistance torque (Cass) of the said electric motor (1) based on the measurement supplied by the said steering wheel torque sensor,
- a steering-wheel angle sensor (Av),
- a sensor of the steering-wheel rotation speed (Vv),

the method comprising a step in which a setpoint value of hardening a torque (Cdur) is added to the said setpoint value of power-assistance torque (Cass) when the said rack (7) comes close to the said stops (31a, 31b) so as to obtain a control setpoint value (Ccom) for controlling the said electric motor making it possible to slow the speed of movement of the said rack (7) when it comes close to the said stops (31a, 31b), the method being **characterized in that** the setpoint value of hardening torque (Cdur) is determined in the following manner:

```
Cdur = K1 (Av).Vv if Av > 0 or Vv > 0,
```

```
Cdur = K2 (Av).Vv if Av < 0 or Vv < 0,
```

$$Cdur = 0 \text{ otherwise},$$

where K1 and K2 are respectively increasing and decreasing functions of the steering-wheel angle (Av) and obey the following laws:

$$K1 = 0 \text{ if } Av < \alpha1.Av_{stop\ d},$$

$$K1 = k1.(Av-\alpha1.Av_{stop\ d}) \text{ if } \alpha1.Av_{stop\ d} < Av < \beta1.Av_{stop\ d},$$

$$K1 = K1max \text{ if } \beta1.Av_{stop\ d} < Av < Av_{stop\ d},$$

where $\alpha1$ and $\beta1$ are positive constants less than 1 such that $\alpha1 < \beta1$, k1 and K1max are positive constants, and $Av_{stop\ d}$ designates the right stop angle of the said steering wheel (11), and

$$K2 = 0 \text{ if } Av > \alpha2.Av_{stop\ g},$$

$$K2 = k2.(Av-\alpha2.Av_{stop\ g}) \text{ if } \alpha2.Av_{stop\ g} > Av > \beta2.Av_{stop\ g}$$

$$K2 = K2max \text{ if } \beta2.Av_{stop\ g} > Av > Av_{stop\ g}$$

where $\alpha2$ and $\beta2$ are negative constants of absolute value less than 1 such that $\alpha2 > \beta2$, K2max is a positive constant, k2 is a negative constant, and $Av_{stop\ g}$ designates the left stop angle of the said steering wheel (11).

2. Method according to Claim 1, **characterized in that** the values of right stop angle ($Av_{stop\ d}$) and left stop angle ($Av_{stop\ g}$) of the said steering wheel (11) are updated periodically.

3. Method according to Claim 2, **characterized in that** the update is carried out:

- by initially assigning minimal values ($Av\ (0)_{stop\ d}$, $Av\ (0)_{stop\ g}$), in absolute value, to the said right stop angle ($Av_{stop\ d}$) and left stop angle ($Av_{stop\ g}$)
- by substituting a measured angle value (Av) for each of the said stop angle values ($Av_{stop\ d}$, $Av_{stop\ g}$) each time that the said measured angle value (Av) exceeds, in absolute value, one of the said stop angle values ($Av_{stop\ d}$, $Av_{stop\ g}$).

4. Method according to any one of Claims 1 to 3, **characterized in that** the said setpoint value of hardening torque (Cdur) is added to the measurement taken by the said steering wheel torque sensor (Cv), so as to obtain a modified steering wheel torque measurement ($Cv_{modified}$) based on which the said power-assistance torque setpoint value (Cass) is generated with the said power-assistance law (35).

**Patentansprüche**

1. Verfahren zur Steuerung einer elektrischen Servolenkungseinheit, die enthält:

- ein Lenkrad (11),
- eine vom Lenkrad (11) gesteuerte Zahnstange (7),
- rechte (31a) und linke Anschläge (31b), die den Hub der Zahnstange (7) begrenzen,
- einen Elektromotor (1), der so eingerichtet ist, dass er dazu beiträgt, die Zahnstange (7) unter der Wirkung des Drehens des Lenkrads (11) in Bewegung zu versetzen,
- einen Lenkrad-Drehmomentsensor (Cv),
- ein Kontrollprogramm (33), das mit Hilfe eines Servogesetzes (35) ordnungsgemäß programmiert ist, um einen Servodrehmoment-Sollwert (Cass) des Elektromotors (1) ausgehend von dem vom Lenkrad-Drehmomentsensor gelieferten Messwert zu erarbeiten,
- einen Lenkradwinkelsensor (Av),
- einen Lenkrad-Drehgeschwindigkeitssensor (Vv), wobei das Verfahren einen Schritt enthält, in dem ein Versteifungsmoment-Sollwert (Cdur) zum Servodrehmoment-Sollwert (Cass) hinzugefügt wird, wenn die Zahnstange (7) in der Nähe der Anschläge (31a, 31b) ankommt, um einen Steuersollwert (Ccom) des Elektromotors zu erhalten, der es ermöglicht, die Verschiebegeschwindigkeit der Zahnstange (7) zu verlangsamen, wenn sie in der Nähe der Anschläge (31a, 31b) ankommt, das Verfahren ist **dadurch gekennzeichnet, dass** der Versteifungsmoment-Sollwert (Cdur) folgendermaßen bestimmt wird:

$$\texttt{Cdur = K1(Av).Vv wenn gilt Av > 0 oder Vv > 0,}$$

$$\texttt{Cdur = K2(Av).Vv wenn gilt Av < 0 oder Vv < 0,}$$

$$\texttt{Cdur = 0 ansonsten,}$$

wobei K1 und K2 zunehmende bzw. abnehmende Funktionen des Lenkradwinkels (Av) sind und den folgenden Gesetzen folgen:

$$\texttt{K1 = 0 wenn gilt Av} < \alpha\texttt{1.Av}_{\texttt{Anschlag d}},$$

$$\texttt{K1 = k1.(Av} - \alpha\texttt{1.Av}_{\texttt{Anschlag d}}) \texttt{ wenn gilt}$$

$$\alpha\texttt{1.Av}_{\texttt{Anschlag d}} < \texttt{Av} < \beta\texttt{1.Av}_{\texttt{Anschlag d}},$$

K1 = K1max wenn gilt $\beta$1.AV$_{\text{Anschlag d}}$ < Av < AV$_{\text{Anschlag d}}$, wobei $\alpha$1 und $\beta$1 positive Konstanten geringer als 1 sind, derart, dass gilt $\alpha$1 < $\beta$1, k1 und K1max positive Konstanten sind, und A$_{\text{VAnschlag d}}$ den rechten Anschlagwinkel des Lenkrads (11) bezeichnet, und

$$\texttt{K2 = 0 wenn gilt Av} > \alpha\texttt{2.AV}_{\texttt{Anschlag g}},$$

$$\texttt{K2 = k2.(Av} - \alpha\texttt{2.Av}_{\texttt{Anschlag g}}) \texttt{ wenn gilt}$$

$$\alpha\texttt{2.AV}_{\texttt{Anschlag g}} > \texttt{Av} > \beta\texttt{2.Av}_{\texttt{Anschlag g}}$$

K2 = K2max wenn gilt $\beta$2.Av$_{\text{Anschlag g}}$ > Av > Av$_{\text{Anschlag g}}$ wobei $\alpha$2 und $\beta$2 negative Konstanten eines Absolutwerts geringer als 1 sind, derart, dass gilt $\alpha$2 > $\beta$2, K2max eine positive Konstante ist, k2 eine negative Konstante ist, und Av$_{\text{Anschlag g}}$ den linken Anschlagwinkel des Lenkrads (11) bezeichnet.

2. Verfahren nach Anspruch 1, **dadurch gekennzeichnet, dass** die Werte des rechten (Av$_{\text{Anschlag d}}$) und linken Anschlagwinkels (Av$_{\text{Anschlag g}}$) des Lenkrads (11) periodisch aktualisiert werden.

3. Verfahren nach Anspruch 2, **dadurch gekennzeichnet, dass** die Aktualisierung durchgeführt wird:

- indem anfangs minimale Werte (Av (0) $_{\text{Anschlag d}}$, Av (0) $_{\text{Anschlag g}}$) im Absolutwert den rechten (Av$_{\text{Anschlag d}}$) und linken Anschlagwinkeln (Av$_{\text{Anschlag g}}$) zugewiesen werden,
- indem ein gemessener Winkelwert (Av) jeden der Anschlagwinkelwerte (Av$_{\text{Anschlag d}}$, Av$_{\text{Anschlag g}}$) immer dann ersetzt, wenn der gemessene Winkelwert (Av) im Absolutwert einen der Anschlagwinkelwerte (Av$_{\text{Anschlag d}}$, Av$_{\text{Anschlag g}}$) überschreitet.

4. Verfahren nach einem der Ansprüche 1 bis 3, **dadurch gekennzeichnet, dass** der Versteifungsmoment-Sollwert (Cdur) zur durch den Lenkradwinkelsensor (Cv) durchgeführten Messung hinzugefügt wird, um einen veränderten Lenkradmomentmesswert (Cv$_{\text{verändert}}$) zu erhalten, von dem ausgehend der Servodrehmoment-Sollwert (Cass) mit dem Servogesetz (35) erarbeitet wird.

FIG.1

FIG.2

FIG.3

FIG.4

FIG.5

FIG.6

FIG.:7

FIG.:8

FIG.:9

**EP 1 446 317 B1**

## RÉFÉRENCES CITÉES DANS LA DESCRIPTION

**Documents brevets cités dans la description**

- WO 0120412 A